# EUROPEAN PATENT APPLICATION

(11) **EP 1 227 138 A1**
(43) Date of publication of application: **31.07.2002**
(21) Application number: 99974081.4
(22) Date of filing: 04.10.1999
(51) Int. Cl.: C09D 127/12, C09D 5/03

(54) **METHOD OF STORING THERMOSETTING FLUORORESIN POWDER COATING COMPOSITION**

(71) Applicant: Daikin Industries, Ltd., Osaka-shi, Osaka 530-8323 (JP)
(72) Inventor: FUKAGAWA, Ryoichi Yodogawa-seisakusho, Settsu-shi Osaka 566-8585 (JP); IWAKIRI, Ryuji, deceased (JP); TANO, Keisuke Yodogawa-seisakusho, Settsu-shi Osaka 566-8585 (JP); TANIZAWA, Daisuke Yodogawa-seisakusho, Settsu-shi Osaka 566-8585 (JP); TSUDA, Nobuhiko Yodogawa-seisakusho, Settsu-shi Osaka 566-8585 (JP)
(74) Representative: HOFFMANN - EITLE
(86) International application number: JP9905457
(87) International publication number: WO0125353

(57) **Abstract**

A thermosetting fluorine-containing resin powder coating composition containing a fluorine-containing resin powder is stored at a temperature lower than a glass transition temperature of the fluorine-containing resin by 20°C or more or at a temperature of 20°C or lower. Preferably during the storage, an environmental relative humidity is 60 % or less and the powder coating composition is stored in a sealed bag having less moisture permeability. According to that storing method, the powder coating composition can be stored for a long period of time without causing blocking and lowering physical properties thereof. For example, even in case where the powder coating composition stored for five weeks or more is coated, characteristics such as smoothness of a coating film is not lowered.

## Description

### TECHNICAL FIELD

The present invention relates to a method for storing a thermosetting fluorine-containing resin powder coating composition for a long period of time.

### BACKGROUND ART

As a resin for thermosetting powder coating composition, an epoxy resin, acrylic resin and polyester resin are mainly used. Also in order to improve weather resistance of a general-purpose resin for powder coating composition, there is a proposal of using a thermosetting fluorine-containing resin as a resin for powder coating composition (JP-B-6-104792).

With respect to a powder coating composition, there is a case where physical properties thereof are lowered during storage. It is said that one of the reasons therefor is that blocking arises between particles of a resin powder during storage thereof. The blocking is said to have a relation with a softening temperature of a resin for powder coating composition. However a general-purpose resin for powder coating composition generally has a high glass transition temperature (50°C or more), and remarkable lowering of physical properties does not occur when storing at an ordinary environmental temperature. Therefore in case of a general-purpose resin, studies have been made for improving other physical properties such as flowability while maintaining an antiblocking property. For example, in case of an epoxy resin, or the like, there is a proposal of modifying the resin itself by giving a plurality of crystalline melting points to the resin (JP-A-9-324031).

However in case of the thermosetting fluorine-containing resin powder coating composition, there is a case where blocking arises during the storage thereof at room temperature.

The inventors of the present invention have made research with respect to the above-mentioned specific phenomena of the thermosetting fluorine-containing resin powder coating composition, and have found that the cause for the blocking is that a glass transition temperature of a thermosetting fluorine-containing resin is as low as 40° to 45°C as compared with a general-purpose resin. Therefore they intended to increase the glass transition temperature of the thermosetting fluorine-containing resin like the general-purpose resin, but it was difficult to prepare a thermosetting fluorine-containing resin having a glass transition temperature exceeding 50°C while maintaining physical properties of the resin for a powder coating composition. In addition, it can be considered that physical properties are lowered more during the storage since a low molecular weight compound such as an oligomer is contained in the thermosetting fluorine-containing resin powder.

An object of the present invention is to provide a method for storing a thermosetting fluorine-containing resin powder coating composition, which enables physical properties thereof as a powder coating composition to be maintained for a long period of time.

The inventors of the present invention have studied means for solving the above-mentioned specific phenomenon of a thermosetting fluorine-containing resin powder coating composition, and have found that the powder coating composition can be stored for a long period of time, for example, for five weeks or more without lowering physical properties thereof as a powder coating composition by storing at a temperature lower than a glass transition temperature (Tg) of a fluorine-containing resin contained in the thermosetting fluorine-containing resin powder coating composition by 20°C or more, particularly at a temperature of 20°C or lower.

### DISCLOSURE OF INVENTION

Namely the present invention relates to the method for storing a thermosetting fluorine-containing resin powder coating composition containing a fluorine-containing resin powder at a temperature lower than a glass transition temperature of the fluorine-containing resin by 20°C or more.

Also the present invention relates to the method for storing a thermosetting fluorine-containing resin powder coating composition containing a fluorine-containing resin powder at a temperature of 20°C or lower.

When an ambient temperature (environmental temperature) is higher than the above-mentioned temperature at storing, it is necessary to decrease the ambient temperature to the temperature at storing.

In order to further inhibit the lowering of physical properties during storing, it is preferable that the storage is carried out at an environmental relative humidity of 60 % or less, and it is particularly preferable to store in a sealed bag or vessel having less moisture permeability.

An effect of the present invention is further enhanced when the storage is carried out by putting the powder coating composition under an environmental relative humidity of 60 % or less into a sealed bag or vessel having less moisture permeability.

When storing according to the method of the present invention, even if the powder coating composition is coated after stored for five weeks or more, there is no lowering of flowability at baking and a coating film having a smooth surface can be obtained.

### BEST MODE FOR CARRYING OUT THE INVENTION

The present invention applies to the thermosetting fluorine-containing resin powder coating composition basically comprising a thermosetting fluorine-containing resin powder, a curing agent, and as case demands, a pigment and various additives.

The thermosetting fluorine-containing resin as a resin component is not limited particularly as far as it is a polymer having a fluorine-containing monomer unit and a crosslinkable reactive group as essential components.

Examples of the fluorine-containing monomer are, for instance, one or two or more of tetrafluoroethylene, chlorotrifluoroethylene, trifluoroethylene, vinylidene fluoride, hexafluoropropylene, pentafluoropropylene, perfluoro(vinyl ether), monofluoroethylene and the like. As case demands, a non-fluorine-containing monomer may be copolymerized therewith.

Examples of the crosslinkable reactive group are, for instance, hydroxyl group, carboxyl group, amino group, amido group, epoxy group, and isocyanate group and in addition, halogen atoms such as bromine and iodine, and the like.

As case demands, the above-mentioned general-purpose non-fluorine-containing thermosetting resin such as an epoxy resin, acrylic resin or polyester resin may be blended as a powder resin component in addition to the above-mentioned thermosetting fluorine-containing resin.

As a curing agent, those which have been used for a thermosetting powder coating composition can be used. Examples thereof are, for instance, a blocked isocyanate compound, acid anhydride, polyamine compound, glycidyl compound, isocyanurate compound, polybasic acid, and the like.

Examples of the pigment are organic pigments such as a condensed azo compound, isoindolenone, quinacridone, diketopyrrolopyrrol, anthraquinone and dioxadine; inorganic oxide pigments such as titanium oxide, iron oxide, carbon black, chromium oxide, lead chromate, white lead and molybdenum orange; metal powders such as aluminum powder and stainless steel powder; and the like.

In addition, various additives which are used usually for a powder coating composition, for example, a filler, ultraviolet ray absorber, leveling agent, flowability control agent, anti-oxidant, heat deterioration preventing agent, gloss control agent, charge control agent, and the like may be optionally added.

Examples of thermosetting fluorine-containing resin powder coating composition, the physical properties of which can be suitably maintained by the storing method of the present invention are, for instance, powder coating compositions which are prepared by using a thermosetting fluorine-containing resin having a relatively low glass transition temperature and are described in JP-B-6-104792, JP-A-5-331388 and Japanese Patent No. 2782726.

The storing method of the present invention has a feature that those thermosetting fluorine-containing resin powder coating compositions are stored at a temperature lower than a glass transition temperature of the fluorine-containing resin by 20°C or more. In case of a usual thermosetting fluorine-containing resin powder coating composition, extreme lowering of physical properties can be prevented by storing at a temperature of 20°C or lower.

It is necessary that such a temperature control is carried out irrespective of an ambient temperature. The temperature control is usually carried out regularly in the tropics, and in a cold district, is carried out particularly during storing in summer time. The temperature control may be carried out by a usual method of providing a temperature control equipment at a storage site.

Though the lowering of physical properties of a thermosetting fluorine-containing resin powder coating composition can be inhibited by the method of storage temperature control of the present invention, in order to further minimize the lowering of physical properties and maintain high quality of the coating composition, it is desirable that the thermosetting fluorine-containing resin powder coating composition is stored by maintaining a relative humidity at 60 % or less, preferably 50 % or less, particularly preferably 30 % or less. If the coating composition is stored at a relative humidity exceeding 60 %, there is a case where moisture accelerates blocking of the fluorine-containing resin particles and thus a lower storing temperature is required.

Non-restricted examples of means for decreasing a humidity are usual means for dehumidification, for instance, installation of a dehumidifier or air conditioner at a storage site, use of a drying agent packed in a bag, and the like.

It is preferable to store the thermosetting fluorine-containing resin powder coating composition in a sealed bag or vessel having a less moisture permeability because the coating composition is less influenced directly by a small change in an ambient environment. In that case, it is preferable that the powder coating composition is dried to a relative humidity of 60 % or less, preferably 50 % or less, particularly preferably 30 % or less and then put in the sealed bag or vessel having a less moisture permeability. At that time, a drying agent may be put therein together.

Examples of preferable bag or vessel having a less moisture permeability are, for instance, those made of a resin material having a low moisture permeability such as polyethylene, polyester, polyvinyl chloride or polyol resin or a laminated material thereof with other material (cloth, or the like) or a bag or vessel made of a material obtained by laminating a metal foil such as an aluminum foil to the above-mentioned less moisture permeable material.

According to the storing method of the present invention, a powder coating composition can be stored for a long period of time without causing blocking and lowering physical properties thereof. For example, even in case where a powder coating composition which has been stored for five weeks or more is coated, a coating film is free from lowering of characteristics such as smoothness.

Then the storing method of the present invention is explained by means of examples, but the present invention is not limited to them.

### EXAMPLE 1

### (Preparation of thermosetting fluorine-containing resin powder coating composition)

A copolymer of chlorotrifluoroethylene/cyclohexyl vinyl ether/isobutyl vinyl ether/hydroxybutyl vinyl ether (weight ratio: about 50/16/9/25) (hydroxyl value: 120 mgKOH/g, glass transition temperature: 45°C, reduction in weight by heating: 2 % by weight or lower, intrinsic viscosity (η) measured at 30°C in tetrahydrofuran: 0.21) was pulverized with an impact hammer mill to give a thermosetting fluorine-containing resin powder. 44 Parts by weight of the obtained fluorine-containing resin powder, 30 parts by weight of a filler (titanium dioxide) and 26 parts by weight of a curing agent (ADDUCT B-1530 available from Hüls Co., Ltd.) were mixed uniformly for about one minute with a dry blender (Henschel mixer available from Mitsui Kako Kikai Kabushiki Kaisha) and melt-kneaded at 80° to 100°C with an extrusion kneader (Buss Co-kneader PR-46 available from Buss Co., Ltd.). Then after cooling, finely pulverizing is carried out with a hammer type impact pulverizer and further roughly pulverized powder was removed with a 150 mesh metal net. Thus a thermosetting fluorine-containing resin powder coating composition to be used in Examples was prepared.

### (Experiment of storing)

100 Grams of the obtained thermosetting fluorine-containing resin powder coating composition was put in a polyethylene bag under the conditions of a temperature of 30°C and a relative humidity of 20 % and the bag was sealed. Then the sealed bag was stored in a thermo-hygrostat at a temperature of 5°C and a relative humidity of 25 % in a state of a load of 10 kg being put on the bag. Two months after, a state of blocking between the particles was evaluated by touching the bag by hand. Then the powder coating composition was taken out of the bag, and applied on an iron plate subjected to zinc phosphate treatment (thickness: 0.8 mm) by electrostatic coating (applied voltage: 60 kV), followed by baking at 190°C for 20 minutes. A smoothness of the obtained coating film (thickness: 40 µm) was evaluated with naked eyes by the following criteria. The results are shown in Table 1.

### Criteria for judging a state of blocking

A: No blocking is recognized at all.
B: Flowability is slightly lowered.
C: There is a blocking partly.
D: Powder coating composition are wholly hardened into a mass.

### Criteria for judging smoothness of coating film

A: Surface of coating film has a specular gloss.
B: Surface of coating film is free from non-uniformity in thickness when evaluated with naked eyes and is smooth.
C: Non-uniformity in thickness is slightly recognized with naked eyes.
D: A lot of non-uniformity in thickness is recognized apparently.

### EXAMPLES 2 to 4 and COMPARATIVE EXAMPES 1 to 3

The thermosetting fluorine-containing resin powder coating composition prepared in Example 1 was stored in the same manner as in Example 1 except that the storing conditions were changed as shown in Table 1. Existence of blocking and smoothness of the surface of coating film were evaluated. The results are shown in Table 1.

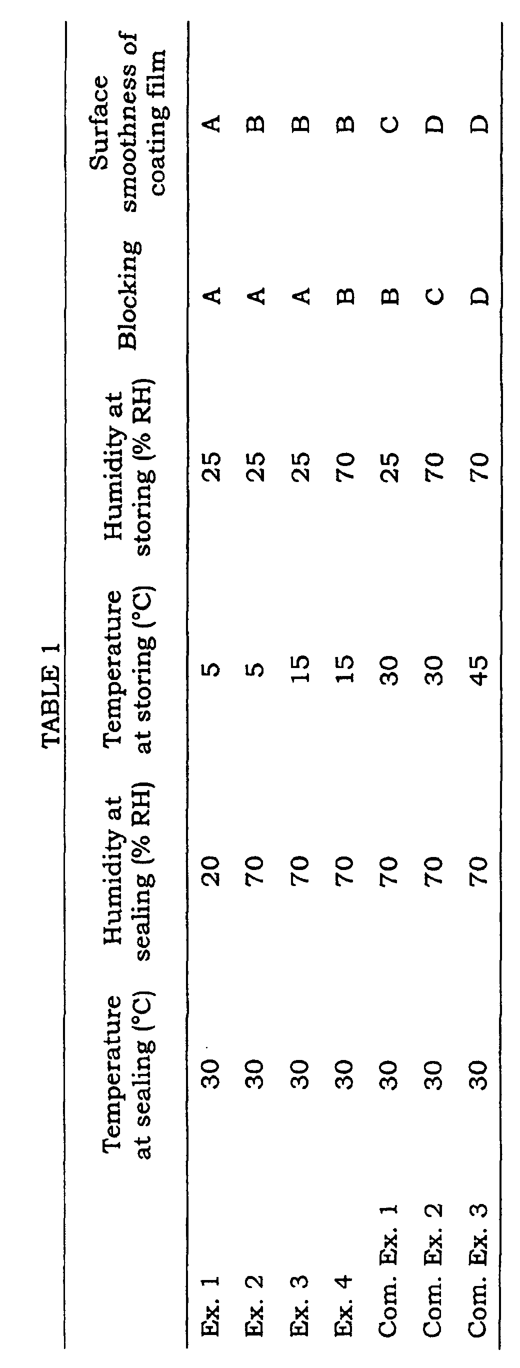

### INDUSTRIAL APPLICABILITY

According to the storing method of the present invention, a powder coating composition can be stored for a long period of time without causing blocking and lowering physical properties thereof. For example, even in case where a powder coating composition stored for five weeks or more is coated, characteristics such as smoothness of a coating film is not lowered.

## Claims

1. A method for storing a thermosetting fluorine-containing resin powder coating composition containing a fluorine-containing resin powder at a temperature lower than a glass transition temperature of the fluorine-containing resin by 20°C or more.

2. A method for storing a thermosetting fluorine-containing resin powder coating composition containing a fluorine-containing resin powder at a temperature of 20°C or lower.

3. A method for storing a thermosetting fluorine-containing resin powder coating composition containing a fluorine-containing resin powder at a temperature lower than an ambient temperature and at a temperature lower than a glass transition temperature of the fluorine-containing resin by 20°C or more or at a temperature of 20°C or lower.

4. The method for storing of any of Claims 1 to 3, wherein the storage is carried out at an environmental relative humidity of 60 % or less.

5. The method for storing of any of Claims 1 to 4, wherein the resin powder coating composition is put in a sealed bag or vessel having less moisture permeability.

6. The method for storing of any of Claims 1 to 4, wherein the storage is carried out by putting the resin powder coating composition under an environmental relative humidity of 60 % or less into a sealed bag or vessel having less moisture permeability.

7. The method for storing of any of Claims 1 to 6, wherein a period of time for storing the thermosetting fluorine-containing resin powder coating composition is five weeks or more.
